# EUROPEAN PATENT SPECIFICATION

(11) **EP 1 851 745 B1**
(45) Date of publication and mention of the grant of the patent: **10.05.2017**
(21) Application number: 05854317.4
(22) Date of filing: 16.12.2005
(51) Int. Cl.: G08C 13/00, G06Q 30/02

(54) **Matching product system and method**
System und Verfahren für angepasste Produkte
Système et procédé pour produits adaptés

(30) Priority: 11.02.2005 US 56304; 17.03.2005 US 82543
(43) Date of publication of application: 07.11.2007
(73) Proprietor: Cimpress Schweiz GmbH, 8406 Winterthur (CH)
(72) Inventor: CONNOLLY, James, M., Reading, MA 01867 (US); HANECHAK, Brian, D., Waltham, MA 02453 (US); WALKER, Kenneth, A., Jr., Bethesda, Maryland 20817 (US)
(74) Representative: Fleuchaus, Michael A.
(86) International application number: PCT/US2005/045570
(87) International publication number: WO 2006/088547

(56) References cited:
- WO-A1-03/034304
- WO-A2-2004/063830
- US-A1- 2002 026 359
- US-A1- 2003 160 819
- US-A1- 2004 215 479
- US-B1- 6 457 045

## Description

### Field of the Invention

The present invention relates to electronic communications and more particularly to personalized electronic communications for marketing and promotion purposes.

### Background

Web-based providers of custom products, taking advantage of the capabilities of the World Wide Web and modern Web browsers, operate Web sites that provide online design services for user's desiring to create customized materials from any computer with web access at whatever time and place is convenient to the user. These service providers typically provide their customers with the ability to access the service provider's Web site, view product templates, and use software tools provided by the site to select a template, add images, text, or other content, and perform various modifications to create a customized product design. After the product has been designed by the user, Web-based service providers also typically allow the user to place an order for the production and delivery to the user's home or business of quantities of high quality, printed products of the type that the user is not capable of producing with the printer systems typically connected to most personal computer systems.

Many printed products, such as business cards, letterhead, promotional brochures, holiday cards, and the like, are intended to be distributed or otherwise consumed by the purchasing party and, therefore, will need to be replenished from time to time. In addition, some printing service providers make calendars, sports team schedules, list of holidays, or other similar content available for their customers to incorporate, if desired, into a custom product. Products incorporating this type of content have a particular window of usefulness and become outdated after a period of time. New supplies of the product with up-to-date content need to be ordered periodically. Customers that fail to reorder materials in a timely manner may not have enough products on hand when a need arises or may be required to pay substantial additional shipping or other costs for expedited production and delivery.

Also, many users of printed products desire to use matching materials that present a consistent image to the public, such as business cards, letterhead, and return address labels that are visually consistent in image, graphics, color scheme, fonts, and other features. Despite the common practice of using matching materials, some professional and business customers who order products from online vendors will initially purchase only a single product and not a full set of all of the matching products available from the vendor. Vendors are, therefore, generally seeking efficient and productive ways to promote to its customers the vendor's other matching product offerings.

If a product vendor sends reorder reminders or matching product solicitations at all to its customer base, the reminders and solicitations, like most promotional communications by a vendor to its customer base, are generally in the form of bulk, standardized emails sent to all or a substantial portion of the vendor's customer base with little or no targeting of the specific history or needs of individual customers. Response rates to bulk, general email campaigns are typically low and vendors run the risk of alienating their customer base by repetitively sending email solicitations that are of little or no interest to many of their customers. Even for those customers who are actually interested in the product or other offer being promoted, traditional bulk non-personalized email campaigns typically do not do a good job of engaging the email recipient or of facilitating the ability of the recipient to place an order for the product with a minimum of research and effort.

There is, therefore, a need for a novel system and method for personalized electronic solicitation that identifies relevant customers, presents the customers with the relevant product information needed to make an immediate purchase decision, and facilitates quick and easy ordering by streamlining the customer purchase process.

### Summary

The present invention according to claim 1 is directed at satisfying the need for systems and methods that provide a personalized email experience. In one aspect, customer order information is searched based on search parameters selected by the product vendor, such as, for example, product type, date of most recent order of the product, and anticipated upcoming customer need. If a product meets the search criteria, an email message is sent to the email address associated with the product. The email includes an image of the customer's personalized product design, either exactly as the design was previously created by the customer or as modified automatically by the vendor system to incorporate new content to replace previously incorporated material that is now outdated or obsolete.

In another aspect, customer order information is searched based on search parameters selected by the product vendor, such as, for example, a product of a first type has been ordered by a customer, but a product of a second type has not. If these search criteria are met, an email message is sent to the email address associated with the first product. The email includes an image of a personalized product design of a second product based on customer information associated with the first product.

When the email is successfully opened at the customer's computer, the customer is presented with the customized product image and with links allowing the customer to either proceed directly to the product ordering section of the vendor's site to complete the order or the design editing section of the vendor's site where the customer can, if desired, modify the product design prior to placing a purchase order.

### Brief Description of the Drawings

Fig. 1 is a schematic representation of a system with which the invention can be employed.
Fig. 2 is a flow chart showing a representative method for generating personalized electronic solicitations.
Fig. 3 is a schematic depiction of an embodiment of an email message.
Fig. 4 is a flow chart showing a representative method for processing an electronic solicitation opened by a recipient.
Fig. 5 is a flow chart showing a representative method for generating personalized electronic matching product solicitations.
Fig. 6 is a flow chart showing a representative method for processing an electronic matching product solicitation opened by a recipient.
Fig. 7 is a schematic depiction of an embodiment of an email message for a matching return address label.

### Description

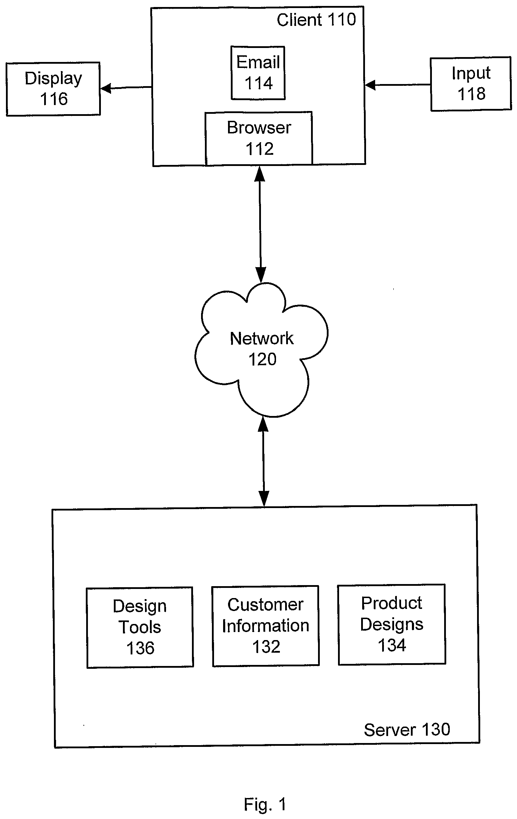

Referring to Fig. 1, client 110 is a typically equipped personal computer, portable computer, or other system capable of communicating via network 120, such as the Web, with remote server systems, such as server 130, and capable of executing a web browser program 112 and an email program 114. The client 110 system also includes a user display 116 capable of displaying text, images, and graphics to a user of the system and one or more user data input devices 118, such as a keyboard and a mouse.

Server 130 is the web site computing and support system of a vendor of customized products. In the following discussion, a custom printed product vendor site that allows users of the site to design and purchase personalized printed products using online software tools available at the site, such as VistaPrint.com operated by VistaPrint Limited, will be discussed, but it will be understood that the invention is not so limited. While server 130 is depicted in Fig. 1 as a single block, it will be understood that server 130 will typically be comprised of multiple servers, data storage systems, and other equipment and devices configured to communicate and operate cooperatively to support the operations of the site.

In the embodiment shown in Fig. 1, the memory system of server 130, which could be comprised of multiple separate storage systems and devices, retains customer information 132 and product designs 134. It will be understood that these are representative of one possible embodiment and other embodiments using different memory organizations or techniques could be employed. Product designs 134 contains the various pre-designed images, layouts, graphics, color schemes, and other content and materials provided for use by site users in preparing custom products. These various elements are retained such that they can be individually selected and combined with the text or other content provided by the user to create a personalized electronic product design. Also within product design information 134 the electronic designs of customers' customized products are retained as separately stored component elements, such as text, layouts, images, graphics, fonts, and organizational and relational information that collectively comprise the product description necessary to allow product components in product design information 134 to be identified, retrieved, and assembled to create a customer's personalized product. Product design information 134 may also contain one or more stored images of the customer product design, such as a high resolution product image suitable for printing on a high quality printing system and one or more low resolution images suitable for displaying on the user's display system. Electronic product design systems allowing a user to create a personalized electronic product design using separately stored layouts, images, and other component elements are described in co-owned and co-pending applications 10/449836, entitled Electronic Document Modification, and 10/646554, entitled Automated Image Resizing and Cropping.

Customer order information 132 contains the data retained by the vendor in connection with each custom design retained in product designs 134. Each custom product design is associated with a unique product design identifier as well as other related information, such as the product type, quantity ordered, date shipped, shipping address, billing address, the customer's account identifier, and so forth.

As mentioned above, some types of custom products will, by their nature, tend to be wanted by customers at more or less predictable times. While usage rates of printed products vary widely and may be subject to unexpected changes, vendors of printed products with sufficient data and experience can, based on analysis of individual or aggregate customer reordering history, make a reasonably informed estimate of when the quantity of product previously ordered may be approaching exhaustion and send an appropriate reorder solicitation that, the vendor hopes, is received at a time when the customer is receptive and ready to reorder.

For time-sensitive content in the product design, the vendor can fairly reliably predict an appropriate reorder time frame. For example, a customer who previously purchased customized products promoting the customer's business, such as postcards, magnets, or the like, containing a calendar or a team schedule, would be well served by receiving an email at an appropriate time prior to be beginning of the following calendar year or team season that serves not only as a timely reminder to order a new version of the product, but that displays an automatically updated image of the new product with the new calendar, team schedule, or other new content as appropriate, that is ready to order with a minimum of required customer input..

Some web-based printing service providers operate on a self-service basis while others offer at least some live help or advice via a telephone, instant messaging, or other means. If a vendor representative is involved, during the course of assisting the customer, the representative may gather information regarding the expected use of the materials being prepared. In the embodiment described herein, the representative has the option of adding a searchable estimated reorder time field to the information associated with the design in customer order information 132. The reorder time value could be implemented as an estimated number of weeks or months until the customer may wish to reorder that product, or as a specific future reorder date, or in other manners.

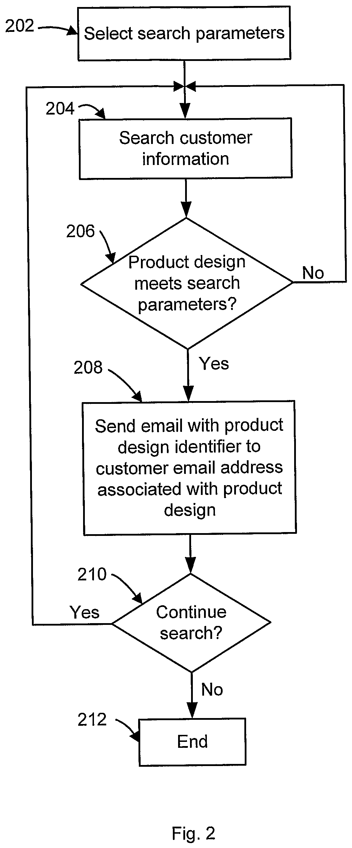

Referring to Fig. 2, a representative method for generating personalized electronic communications will be discussed. When the vendor decides to initiate a customized promotional email campaign, the vendor identifies at step 202 the one or more search parameters to be used to identify customers that qualify to receive the email. Selecting email recipients from the vendor's customer base according to specific search parameters allows the vendor to target the emails to relevant customers. As mentioned above, search parameters could include product type, order date, order quantity, product content, or any other factor that would tend to cause some customers to desire, or be required, to reorder or update previously ordered printed products.

At step 204, a search of customer information 132 to identify appropriate recipients for the email is performed. Some searches could be executed individually on an ad hoc basis while other searches could be set up to run routinely on a weekly, daily, or other predetermined schedule or frequency as desired by the vendor.

If a product is identified at step 206 as meeting the selection criteria, at step 208 the email address associated with the customer account for that product is retrieved from customer information 132 and an email is prepared and sent to that email address. The email incorporates the unique product design identifier of the qualifying product. As will be discussed in more detail below, the product identifier is used later to personalize the email image displayed to the user of client 110. At step 210, if the search has not been completed, steps 206 and 208 are repeated. When the search has been completed or otherwise terminated by the vendor, the process will end at step 214.

The method depicted in Fig, 2 shows the preparing and sending of emails to identified customers occurring while the search is in progress. This is not essential and the method could be implemented in alternate ways. For example, the search of customer information could first be completed to compile a list of qualifying products with the emails generated independently as a separate process at a later time.

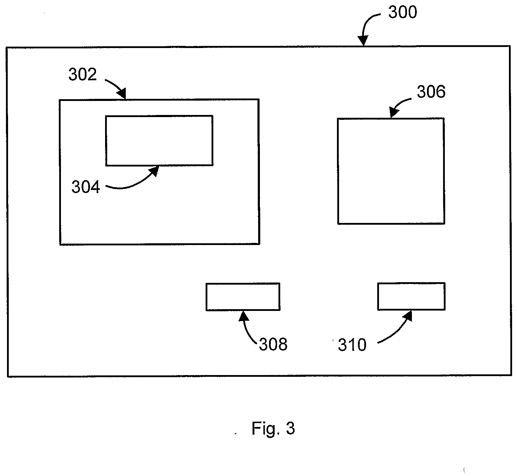

Referring to Fig. 3, a simplified depiction of the elements of a representative personalized email message 300 will be discussed. In the disclosed embodiment, the vendor designs email 300 to display an image of the customer's previously prepared personalized custom product, indicated by product image area 302. Depending on the product being promoted by the vendor, image area 302 could be an image of a business card, postcard, letterhead, return address label, or any other customized product offered by the vendor.

For various reasons, many emails are never received by the intended recipient or, if received, are never opened. In the disclosed embodiment, to avoid the processing load at server 130 that would be associated with preparing design images for emails that are never received or opened, the image of the customer's personalized product is not made a part of the email transmitted at step 208. Customized image area 302 is occupied initially by a generic placeholder image with an informational message to the user such as "Please wait while your image loads". As discussed below, if and when the email is opened by the recipient, the placeholder image at 302 will be replaced with the customer's product image, creating a personalized promotional experience for the recipient. As an alternative embodiment, if processing load at the server is not an issue or concern, the image of the customized product could be created and attached to the email as originally transmitted.

As mentioned above, the customer may optionally have incorporated vendor-provided time-sensitive content, such as a calendar, a team schedule, or a list of holidays, into the customer's personalized product design. This type of content, if present in a particular customer's product design, is represented as content area 304.

Email 300 will also typically include one or more areas of text and graphics, represented collectively shown in Fig. 3 as message content area 306, containing information relative to the specific offer or promotion being made in the email. Active link 308 allows the customer, if desired, to initiate the purchase process for the promoted product. Server 130 will respond to user activation of link 308 by opening a new browser window displaying the vendor's product purchase page, thereby allowing the user to immediately and easily commence the product ordering process. In some cases, the customer may wish to modify the product design prior to ordering. Active link 310 allows the customer, if desired, to initiate the product design edit process for the displayed product image. Server 130 will respond to user activation of link 310 by opening a new browser window displaying the product image on a product design editing page, allowing the user to immediately and easily initiate one or more modifications to the design, as desired, prior to commencing the product purchase process.

The above-described elements of email 300 may be sized and arranged within email 300 as desired by the vendor. The vendor may also incorporate various other content into email 300 for aesthetic or informational purposes, such as additional images, graphics, text, logos, and links. Because the typical vendor offers a variety of products of various sizes and shapes and because each promotion may vary in terms and duration, the vendor will typically prepare different email content and layout for each different type of promotion. After a design and format for a particular product promotion is selected, all emails sent to customers identified in the search for that promotion will be substantially identical except that each email will have associated therewith a specific product identifier associated with the specific recipient of the email that will be used by server 130 to customize the email image with the email recipient's personalized product image.

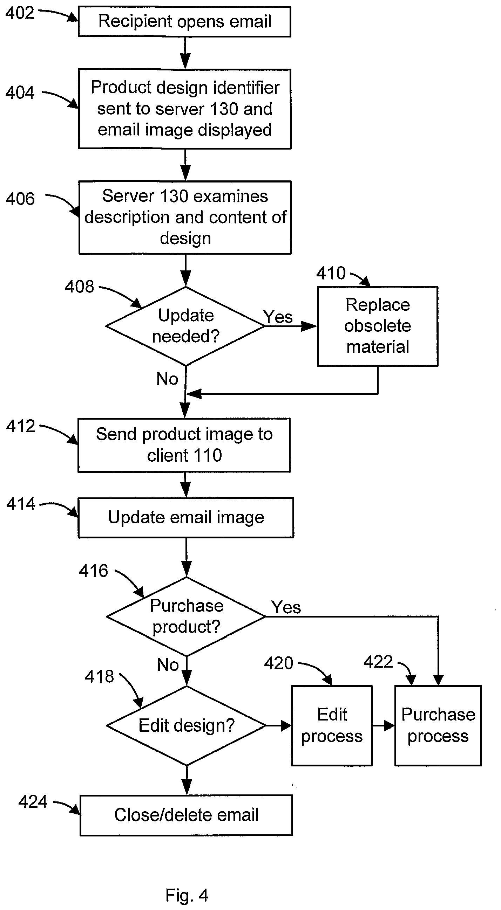

Referring now to Fig. 4, a representative method for presenting a personalized promotional email at client system 110 will be discussed. At step 402, the user at client 110 opens the received email. At step 404, in response to the user's action, the product identifier from the email is returned to server 130 and the email 300 image is displayed to the user on display 116.

At step 406, when server 130 receives the product identifier from client 110, server 130 examines the component elements of the product design corresponding to the received product identifier received from client 100. At step 408, a determination is made regarding whether an update to the stored product design should be performed prior to sending the email. Some emails may be for straight reorders of products that do not require any modification prior to the reorder being placed while other emails may be for products that need to be updated with current information. For a product requiring no modification, a low-resolution display image of the stored product design suitable for displaying to the user on display 116 is sent to client 110 at step 412.

If the product is identified as containing component content that is obsolete or otherwise needs to be replaced, substitute content identified by the vendor will be retrieved from product designs 134 and the product design will be updated to replace the obsolete component element with the corresponding replacement element at step 410. For example, if content item 304 in the retained product design is a vendor-prepared image of a calendar for a year that is completely or substantially over, server 130 will automatically delete the old calendar component image and substitute a replacement content image for the next calendar year as content element 304 prior to preparing and sending the display image to client 110 at step 412 for incorporation into email 300. Because the product design is constructed from component elements, new or substitute vendor-supplied content elements can be readily changed by the vendor as appropriate.

As mentioned above, the presently disclosed embodiment performs the steps 406-414, related to updating of the custom image, only after the associated email is opened. This avoids incurring unnecessary processor workload that would arise from performing image processing for emails that are never received or opened. As an alternate embodiment, if processor workload is not a concern or issue, steps 406-410 could be performed after step 206 before the email is sent and steps 406-414 could be eliminated from the process shown in Fig. 4.

At step 414, email image 300 is updated to replace the generic placeholder image that originally occupied the image 302 area with the customer's personalized product image received from server 130. After reviewing the content of the email, the customer may decide to place an order for the product exactly as it is displayed in the email, may decide to place an order for the product after one or more edits have been made to the product design, or may decide to delete or close the email. As discussed above, in the disclosed embodiment the email contains a purchase link and an edit link to increase user flexibility. At step 416, if the customer clicks on the purchase link in links 308, a new browser window will be opened and server 130 will display an appropriate page to allow the customer to being the purchase process at step 422. At step 418, if the customer instead selects the edit link from links 308, a new browser window will be opened and server 130 will display an appropriate edit page for the customer to enter the edit process at step 420. When the customer has edited the design as desired, the customer can proceed to the purchase process 422. The vendor may choose to incorporate a login process into edit process 420 or purchase process 422 to verify the identity and authority of the customer.

Of course, not all customers will choose to accept or pursue the offer. After reviewing the email contents, at step 424 some customers may choose to delete the email or close it for later review and consideration.

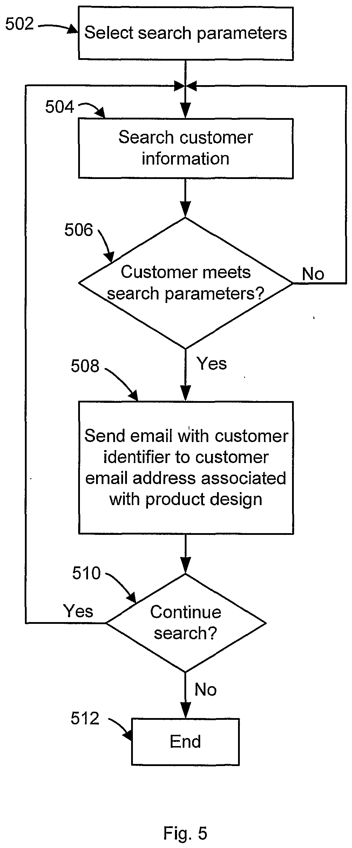

The foregoing discussion described an exemplary automated method of soliciting a new order for a previously ordered product. Referring now to Figs. 5-7, an exemplary automated method of soliciting orders for one or more personalized matching products will be discussed. As used herein, different types of products are "matching" products if they have visual similarity because they have one or more design features in common, such as images, graphics, fonts, and color scheme, and if they are customized so as to contain information from or about a specific customer. For example, a business card and a return address label that both use the same color scheme, image, and font and that both incorporate some customizing information supplied by or related to the same customer, such as a business name and address, would be matching products as used herein. Other types of matching printed products offered by the vendor could include letterhead, envelopes, brochures, presentation folders, and the like. Because of the wide variation in size and proportion among the different types of products, various differently cropped and/or sized versions of the images, graphics, and other elements may be used as appropriate to the specific product.

The implementation of the matching product email process shown in Fig. 5 is similar, but not identical, to the process described above in connection with Fig. 2. In Fig, 2, the search is conducted for the purpose of identifying a particular previously ordered product that the customer may wish to reorder. In Fig. 5, the search is conducted for the purpose of identifying a customer who may be interested in ordering a second type of product that matches a first type of product previously ordered by the customer. The identification of the specific previously ordered product design that will be used in the creation of the matching product design is deferred until after the email is opened by the recipient.

When the vendor decides to initiate a customized promotional email campaign for a matching custom product, the vendor identifies at step 502 the one or more search parameters to be used to identify customers who qualify to receive the email. For simplicity of explanation, the following discussion will assume that a vendor desires to conduct an email marketing campaign to promote matching return address labels to customers who have previously purchased a business card from the vendor. It will be understood that the invention is not so limited and that various search parameters could be employed.

At step 504, customer information 132 is searched to identify a customer who has previously placed an order for business cards. When a customer is identified at step 506, the email address associated with the customer's account is retrieved from customer information 132 and an email is prepared and sent to that email address at step 508. The email incorporates the associated customer account identifier.

At step 510, if the search for relevant business card customers has not been completed, steps 506 and 508 are repeated. When the search has been completed or otherwise terminated by the vendor, the process will end at step 512. While the method depicted in Fig, 5 shows the preparing and sending of emails to identified customers occurring while the search is in progress, this is not essential and the method could be implemented in alternate ways, such as by performing the customer identification search and the customer email generation as separate processes at different times.

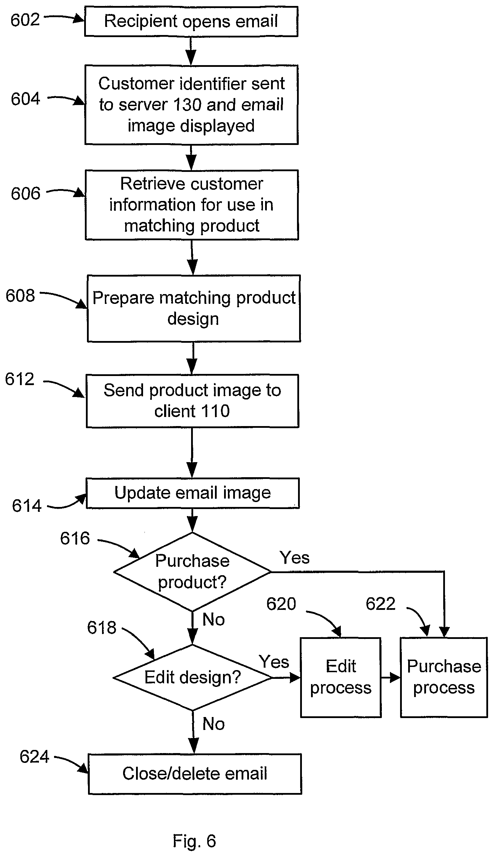

Referring now to Fig. 6, a representative method for presenting a personalized promotional email promoting a matching product at client system 110 will be discussed. At step 602, the user at client 110 opens the received email. At step 604, in response to the user's action of opening the email, the customer account identifier from the email is returned to server 130 and the email image, initially containing a generic placeholder image in the location of the matching product design, is displayed to the user on display 116.

At step 606, when server 130 receives the account identifier from client 110, server 130 identifies the specific business card design associated with the account identifier that will be used to determine the design of the matching return address label. Some customers may have more than one business card design associated with their account. If this is the case, the most recently ordered business card design is used.

Also at step 606, server 130 retrieves the name and address from customer information 132 that will be incorporated into the matching product design. In the disclosed embodiment, server 130 uses the shipping name and address information associated with the customer account. Other sources of name and address information for incorporation into the matching customized product design could also be employed.

At step 608 the design of the matching return address label is prepared by automatically combining the retrieved customer name and address information, a return address label layout, and the color scheme, font, and other design element information from the identified business card design. In the disclosed embodiment, as mentioned above, each product design is stored in product designs 134 as separately identifiable and retrievable elements, including a layout, a color scheme, and one or more fonts, plus, if used in a particular design, one or more images, graphics, or other content elements. A return address label design having a similar visual appearance to the business card can be readily created by automatically taking the color scheme, fonts, and other relevant elements used in the business card design and applying them to a return address label layout. The vendor could employ alternate methods for the creation of the customized matching product design at server 130. For example, instead of individually storing and combining separate design components, the vendor could have implemented the system using substantially complete matching product designs that were previously prepared by the vendor and stored in product design 134 ready to be combined with the customer's name and address information.

If for some reason a return address label design matching the identified business card design cannot be located or generated in a timely manner in a particular case, server 130 will generate a default product image for displaying at client 118. For example, if the shipping address is in the United States, the default label design might include an image of the American flag. Shipping addresses in other countries would cause the selection of images of interest to that country or of general interest. Other approaches to selecting a default design could be readily employed.

Identifying the business card design to be used and generating the matching product image only after the associated email is opened ensures that the very latest business card design is selected as the basis for the matching product and also avoids incurring unnecessary processor workload that would arise from performing image processing for emails that are never received or opened. If these issues are of no concern in a particular embodiment, steps 606 and 608 could be performed after step 506 before the email is sent.

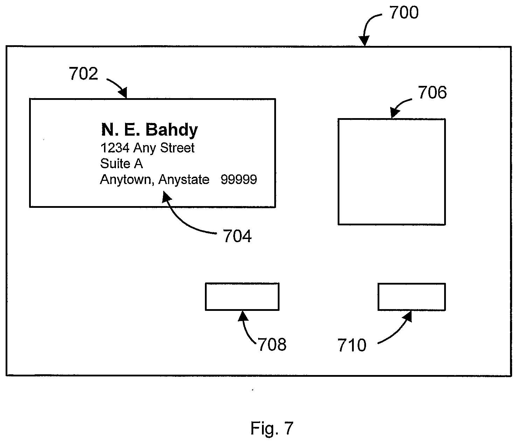

At step 612, the matching product design is sent to client 110 and, at step 614, the email image is updated to replace the generic placeholder image with the customer's personalized matching product image received from server 130. Fig. 7 depicts email 700 displaying matching return address label design 702 after the email has been updated at step 614. As was discussed above in connection with email 300 in Fig. 3, email 700 includes a purchase initiation link 708, an edit initiation link 710, and a message content area 706 containing information describing the matching return address label promotion. The customer name and address information 704 associated with the customer account is rendered in the same font scheme used in the matching business card design.

After reviewing the content of the email, the customer may decide to place an order for the matching product exactly as it is displayed in the email, may decide to place an order for the product after one or more edits have been made to the product design, or may decide to delete or close the email. At step 616, if the customer clicks on the purchase link 708, a new browser window will be opened and server 130 will display an appropriate page to allow the customer to being the purchase process at step 622. At step 618, if the customer instead selects the edit link 710, a new browser window will be opened and server 130 will display an appropriate edit page for the customer to enter the edit process at step 620. When the customer has edited the design as desired, the customer can proceed to the purchase process 622. The vendor may choose to incorporate a login process into edit process 620 or purchase process 622 to verify the identity and authority of the customer. Those customers who have no interest in purchasing or editing the displayed matching product can choose to close or delete the email at step 624.

If the vendor offers multiple matching products, email 700 could include one or more additional images of different matching products such that multiple matching product images are simultaneously displayed to the customer. Alternatively, if the size or number of matching product images, or if the amount of processing required to generate the images, makes the displaying of all images simultaneously undesirable, email 700 could include a single product image with an accompanying link labeled as, for example, "show other matching products", that, when selected by the customer, would cause server 130 to generate one or more additional individual matching product images for forwarding to and displaying at client 110.

While exemplary embodiments have been discussed, the described embodiments are to be considered as illustrative rather than restrictive. The scope of the invention is as indicated in the following claims and all equivalent methods and systems.

## Claims

1. A computer-implemented method of marketing a customized product, the method comprising:
retaining customer information for a plurality of customers, the customer information including at least customer email addresses,
retaining a plurality of designs of previously ordered products, each previously ordered product design being associated with a customer and containing at least some customer content,
identifying (504-506) from the customer information a customer who has ordered at least one first type of product having a first product design and who has an associated customer account identifier,
selecting one of the at least one first type of product ordered by the identified customer, and
sending (508) from a server (130) an email (700) to an email address associated with the identified customer, the email comprising the customer account identifier and being adapted with a product image area (302), initially occupied by a generic placeholder image, to display a second product design (702) for a second type of product,
in response to a recipient opening the email (602) at a client (110), returning the customer account identifierto the server for enabling replacement of the generic placeholder image by a product image having the second product design for display to the recipient and displaying the generic placeholder image in the product image area,
upon receipt of the customer account identifier at the server, automatically creating the second product design based on the first product design associated with the customer account identifier, sending the product image having the second product design to the client (110) and replacing the generic placeholder image by the product image having the second product design in the product image area of the email at the client (110), wherein the second product design has at least one design element in common with the selected first product design and contains at least some customer information contained in the first product design.

2. The method of claims 1, further comprising identifying (504-506) the first product design only after the email has been opened by the recipient.

3. The method of claims 1 to 2, wherein the email further displays at least one link (708) adapted to allow the recipient of the email to initiate a purchase process for the customized product

4. The method of claims 1 to 3, wherein the email further displays at least one link (710) adapted to allow the recipient of the email to initiate an edit process such that the recipient can make one or more changes to the customized product displayed in the email.

## Patentansprüche

1. Computerimplementiertes Verfahren zum Vermarkten eines individuell angepassten Produktes, wobei das Verfahren umfasst:
Vorhalten von Kundeninformationen für eine Vielzahl von Kunden, wobei die Kundeninformationen mindestens Kunden-E-Mail-Adressen aufweisen,
Vorhalten einer Vielzahl von Gestaltungen zuvor bestellter Produkte, wobei jede Gestaltung eines zuvor bestellten Produktes einem Kunden zugeordnet ist und mindestens einige Kundeninhalte enthält,
Identifizieren (504 - 506) eines Kunden aus den Kundeninformationen, der mindestens eine erste Art eines Produktes mit einer ersten Produktgestaltung bestellt hat und der eine zugeordnete Kundenkontokennung hat,
Auswählen von einer der mindestens einen durch den identifizierten Kunden bestellten ersten Art eines Produktes und
Senden (508) einer E-Mail (700) von einem Server (130) an eine E-Mail-Adresse, die dem identifizierten Kunden zugeordnet ist, wobei die E-Mail die Kundenkontokennung umfasst und mit einem Produktbildbereich (302) angepasst ist, der anfänglich mit einem generischen Platzhalterbild besetzt ist, um eine zweite Produktgestaltung (702) für eine zweite Art eines Produktes anzuzeigen,
in Antwort darauf, dass ein Empfänger die E-Mail (602) an einem Client (110) öffnet, Zurücksenden der Kundenkontokennung an den Server zum Ermöglichen eines Ersetzens des generischen Platzhalterbildes durch ein Produktbild mit der zweiten Produktgestaltung zur Anzeige für den Empfänger und Anzeigen des generischen Platzhalterbildes in dem Produktbildbereich,
bei Empfang der Kundenkontokennung an dem Server automatisches Erzeugen der zweiten Produktgestaltung auf Basis der ersten Produktgestaltung, die der Kundenkontokennung zugeordnet ist, Senden des Produktbildes mit der zweiten Produktgestaltung an den Client (110) und Ersetzen des generischen Platzhalterbildes durch das Produktbild mit der zweiten Produktgestaltung in dem Produktbildbereich der E-Mail an dem Client (110), wobei die zweite Produktgestaltung mindestens ein Gestaltungselement mit der ausgewählten erste Produktgestaltung gemeinsam hat und mindestens einige Kundeninformationen enthält, die in der ersten Produktgestaltung enthalten sind.

2. Verfahren nach Anspruch 1, das weiterhin umfasst, die erste Produktgestaltung erst zu identifizieren (504 - 506), nachdem die E-Mail durch den Empfänger geöffnet wurde.

3. Verfahren nach Anspruch 1 bis 2, bei dem die E-Mail weiterhin mindestens einen Link (708) anzeigt, der dazu angepasst ist, dem Empfänger der E-Mail das Einleiten eines Kaufprozesses für das individuell angepasste Produkt zu erlauben.

4. Verfahren nach Anspruch 1 bis 3, bei dem die E-Mail weiterhin mindestens einen Link (710) anzeigt, der dazu angepasst ist, dem Empfänger der E-Mail das Einleiten eines Bearbeitungsprozesses in der Weise zu erlauben, dass der Empfänger an dem in der E-Mail angezeigten, individuell angepassten Produkt eine oder mehr Änderungen vornehmen kann.

## Revendications

1. Méthode implémentée par ordinateur de marketing d'un produit personnalisé, la méthode comprenant:
la conservation d'informations du client pour une pluralité de clients, les informations du client comportant au moins des adresses de courrier électronique du client,
la conservation d'une pluralité de designs de produits commandés précédemment, chaque design de produit commandé précédemment étant associé à un client et contenant au moins quelques contenus de client,
l'identification (504-506) à partir des informations du client d'un client qui a commandé au moins un premier type de produit possédant un premier design de produit et qui possède un identifiant de compte de client associé,
la sélection d'un d'au moins l'unique premiertype de produit commandé par le client identifié,
et
l'expédition (508) à partir d'un serveur (130) d'un courrier électronique (700) vers une adresse de courrier électronique associée au client identifié, le courrier électronique comprenant l'identifiant de compte de client associé et étant adapté avec une zone d'image de produit (302) initialement occupée par une image de caractère de remplacement générique pour afficher un second design de produit (702) pour un second type de produit,
en réponse à un destinataire ouvrant le courrier électronique (602) sur un client (110), le retour de l'identifiant de compte de client au serveur afin de permettre le remplacement de l'image de caractère de remplacement générique par une image de produit possédant le second design de produit en vue de l'affichage au destinataire et d'afficher l'image de caractère de remplacement générique dans la zone d'image de produit,
sur réception de l'identifiant de compte de client sur le serveur, la création automatique du second design de produit basée sur le premier design de produit associé avec l'identifiant de compte de client, l'expédition au client (110) de l'image de produit possédant le second design de produit et le remplacement de l'image de caractère de remplacement générique par l'image de produit possédant le second design de produit dans la zone d'image de produit du courrier électronique sur le client (110), dans lequel le second design de produit possède au moins un élément de design en commun avec le premier design de produit sélectionné et contient au moins quelques informations du client contenues dans le premier design de produit.

2. Méthode selon la revendication 1, comprenant par ailleurs l'identification (504 - 506) du premier design de produit uniquement après que le courrier électronique ait été ouvert par le destinataire.

3. Méthode selon les revendications 1 à 2, dans laquelle le courrier électronique affiche par ailleurs au moins un lien (708) adapté à permettre au destinataire du courrier électronique de lancer un processus d'achat pour le produit personnalisé.

4. Méthode selon les revendications 1 à 3, dans laquelle le courrier électronique affiche par ailleurs au moins un lien (710) adapté à permettre au destinataire du courrier électronique de lancer un processus d'édition tel que le destinataire peut réaliser une ou plusieurs modifications sur le produit personnalisé affiché dans le courrier électronique.
